# EUROPÄISCHE PATENTSCHRIFT

(11) **EP 3 680 196 B1**
(45) Veröffentlichungstag und Bekanntmachung des Hinweises auf die Patenterteilung: **15.03.2023**
(21) Anmeldenummer: 20150414.9
(22) Anmeldetag: 07.01.2020
(51) Int. Cl.: B65G 1/04

(54) **WARENLAGER FÜR DIE EINZELPLATZLAGERUNG VON STÜCKGÜTERN**
WAREHOUSE FOR THE INDIVIDUAL PLACEMENT OF GOODS
ENTREPÔT DE MARCHANDISES POUR L'ENTREPOSAGE INDIVIDUEL DE MARCHANDISES DE DÉTAIL

(30) Priorität: 09.01.2019 DE 102019100420
(43) Veröffentlichungstag der Anmeldung: 15.07.2020
(73) Patentinhaber: Nedcon B.V., 7005 BJ Doetinchem (NL)
(72) Erfinder:
(74) Vertreter: Janke Scholl Patentanwälte PartG mbB

(56) Entgegenhaltungen:
- EP-A1- 3 268 301
- WO-A1-2015/131924
- JP-U- S4 959 274
- JP-U- S5 224 685
- JP-U- H03 116 304
- US-A- 3 738 506
- US-A- 4 273 494

## Beschreibung

Die Erfindung betrifft ein Warenlager zum Lagern von Stückgütern, mit einer Hauptgasse und mit quer zu der Hauptgasse angeordneten Lagergassen mit einer Mehrzahl von Lagerplätzen zur Aufnahme eines jeweiligen Stückguts. Parallel zu der Hauptgasse sind zumindest einen Teil der in den Lagergassen wirkenden Gewichtskräfte stützende Träger angeordnet, die an Stützen befestigt sind und sich zwischen diesen Befestigungen erstrecken. In der Hauptgasse ist eine Transporteinheit für den Transport der Stückgüter angeordnet, wobei die Transporteinheit einen ersten Transportmechanismus zur Bewegung längs der Hauptgasse und einen zweiten Transportmechanismus zur Übergabe eines Stückguts von der Transporteinheit in eine der Lagergassen und zur Übernahme eines Stückguts von einer der Lagergassen auf die Transporteinheit aufweist. Ein quer zur Hauptgasse beweglicher Schlitten ist Bestandteil des zweiten Transportmechanismus und bildet eine Auflage für das Stückgut bei dessen Übergabe und Übernahme.

Aus der EP 2 570 370 A1 geht ein System zum Lagern und zum Abgeben von Transporteinheiten hervor, bei dem Transporteinheiten in mehreren Regalebenen eines Regals lagerbar sind. Die in dem Regal gelagerten Transporteinheiten sind einem Aufzug zuführbar und mittels des Aufzugs an einen Abgabebereich übergebbar. Der Aufzug ist als Umlaufaufzug mit mehreren Fahrkörben für Transporteinheiten ausgebildet. Ferner können mehrere Aufzüge für mehrere Module vorgesehen sein, wobei mindestens einer dieser Aufzüge für den Transport der Transporteinheiten in einer Hauptgasse angeordnet ist.

Auch die US 3,738,506 A offenbart ein Lagersystem mit Transporteinheiten, die mit einem Lift, zur Aufnahme jeweils eines Stückguts, ausgebildet sind. Der Lift ist sowohl horizontal über die Transporteinheit entlang der Hauptgasse, als auch vertikal in dieser verfahrbar, um das Stückgut an seinen entsprechenden Lagerort zu bringen oder es von dort abzuholen. In dem Lift ist ein um eine vertikale Achse drehbarer Drehteller angeordnet, auf dem die Ausrichtung des Stückguts (abhängig von der Be- oder Entladerichtung) variiert werden kann. Ferner ist auf dem Drehteller ein Schlitten 41 angeordnet, der über zueinander fluchtende Schienen des Liftes und der entsprechenden Lagergasse das Stück-gut zu- oder entladen kann.

Ferner wird in der JP H03 116304 U ein klassisches Gabelstaplersystem vorgeschlagen. Die gesamte Verfahreinrichtung ist an ihrem unteren Ende teilweise schwenkbar 22, 28 an dem Gabelstaplerchassis 12 gelagert, wobei darüberliegend ein Zugelement 45 ausgebildet ist, das es ermöglicht, die Verfahreinrichtung quer zur Fahrzeuglängsrichtung zu verschwenken.

Warenlager sind üblicherweise mehrgeschossige Bauwerke, die aus Hauptgassen und Nebengassen bestehen. Solche Warenlager werden oft in Stahl-Skelettbauweise errichtet. Die Tragkonstruktion setzt sich aus einem Tragwerk aus einer Vielzahl von Stahlstützen und dazwischen befestigten Stahlträgern zusammen, die beispielsweise durch Schrauben oder Niete miteinander verbunden werden. Bei Stahlskelettbauwerken kommt es bereits aufgrund der Eigengewichte der Stahlbauteile zu Verformungen der Tragkonstruktion. Durch zusätzliche, an den Stützen und/oder den Trägern befestigte anwendungsspezifische Konstruktionen, wie zum Beispiel Schienensysteme für Transporteinheiten eines Lagersystems, wirken zusätzliche Gewichtslasten, welche die Verformungen des Tragwerks noch vergrößern. Dabei weichen bereits die Stützen aus ihrer vertikalen Ausrichtung aus. Vor allem biegen die dazwischen angeordneten, im Wesentlichen horizontalen oder schräg angeordneten Träger durch.

Die Aufgabe der vorliegenden Erfindung besteht darin, ein Warenlager zum Lagern von Stückgütern dahingehend weiterzuentwickeln, dass Verformungen der Tragkonstruktion aus vertikalen Stützen und daran befestigten horizontalen Trägern derart berücksichtigt werden, dass trotzdem ein sicheres Ein- und Auslagern der Stückgüter möglich ist.

Diese Aufgabe wird durch ein Warenlager mit den Merkmalen des Patentanspruchs 1 gelöst. Bevorzugte oder vorteilhafte Ausführungsformen der Erfindung ergeben sich aus den Unteransprüchen.

Das erfindungsgemäße Warenlager für die Lagerung von Stückgütern umfasst eine Transporteinheit mit einem Schlitten, der in der Transporteinheit auf einer neigbaren Plattform mit einem Neigemechanismus abgestützt ist, wobei der Neigemechanismus ausgebildet ist, die Plattform relativ zur Transporteinheit zu neigen.

Die Transporteinheit ist längs der Hauptgasse beweglich, wobei das darauf angeordnete Stückgut auf der Plattform gesichert ist. Ein vorbestimmter Lagerplatz für das Stückgut, der in einer beliebigen Lagergasse liegen kann, wird dann angesteuert, und die Plattform mit dem darauf angeordneten Schlitten und dem Stückgut wird zunächst vor bzw. gegenüber der vorbestimmten Lagergasse positioniert.

Aufgrund der Eigengewichte der im Bereich der jeweiligen Lagergasse angeordneten Träger sowie der in der Tragkonstruktion wirkenden Belastungen, insbesondere aufgrund bereits in der Lagergasse gelagerter Stückgüter, weist der Träger eine Durchbiegung auf. Als Durchbiegung ist ein orthogonaler Versatz in der verformten Lage des Trägers im Vergleich zu einer unverformten, exakt horizontalen Lage des Trägers zu verstehen. Der Versatz ist u. a. abhängig vom Werkstoff, von der Belastung und von der Steifigkeit des Trägers. Mit anderen Worten weist der jeweilige Träger eine leichte Krümmung im Vergleich zur Horizontalen auf, und der an der Plattform angeordnete Neigemechanismus ist ausgebildet, die Plattform an die vorhandene Krümmung des Trägers anzugleichen. Somit ist mittels des Neigemechanismus die Neigung der Plattform an die aktuelle Erstreckung des jeweiligen Trägers anpassbar.

An der Plattform sowie in den Lagergassen sind Fahrbahnen für den Schlitten ausgebildet, die durch Positionierung und Neigung der Plattform relativ zum Träger fluchtend zueinander eingestellt werden. Durch dieses Einstellen ist es möglich, sowohl eine Übergabe des Stückguts von der Plattform der Transporteinheit in die jeweilige Lagergasse als auch eine umgekehrte Übernahme des Stückguts von der jeweiligen Lagergasse zurück auf die Plattform der Transporteinheit sicher und gleichmäßig zu gestalten. Insbesondere wird ein Verkanten oder ein Anstoßen des Schlittens verhindert, was zu einer Erschütterung der Ladung oder des Stückguts führen würde, sowie zu einem hohen Verschleiß an den beteiligten Bauteilen.

Erfindungsgemäß umfasst der Neigemechanismus ein erstes und ein zweites Stellglied, die zur Neigung der Plattform getrennt einstellbar sind. Die Stellglieder können also beide oder alternativ einzeln eingestellt werden. Die Stellglieder können insbesondere pneumatisch oder hydraulisch betätigt werden, um eine Höhe der jeweiligen Seite der Plattform, an der das jeweilige Stellglied angeordnet ist, und damit zugleich die Neigung der Plattform relativ zur Transporteinheit einzustellen.

Vorzugsweise sind die Stellglieder unterhalb der Plattform angeordnet und stützen die Plattform gegenüber einem Hebewerk oder einer Hebebühne ab, die Bestandteil der Transporteinheit ist. Dabei können sich die Stellglieder im Wesentlichen entlang der gesamten Länge der jeweiligen Seite der Plattform erstrecken.

Ferner ist denkbar, dass der Neigemechanismus mehr als zwei Stellglieder umfasst, um so eine Neigung der Plattform im dreidimensionalen Raum zu ermöglichen. Dabei können die Stellglieder an den Ecken der Plattform angeordnet sein, z. B. an allen vier Ecken.

Erfindungsgemäß weist der Neigemechanismus eine Schwenkeinrichtung mit einer sich quer zur Richtung der Hauptgasse erstreckenden Schwenkachse auf, wobei ebenfalls erfindungsgemäß die Schwenkeinrichtung mit der Schwenkachse mittig unter der Plattform angeordnet ist. Mithin ist die Plattform als eine Wippe ausgebildet und ist um die Schwenkachse gelenkig gelagert. Durch Betätigung der Schwenkeinrichtung werden die beiden quer zur Hauptgasse angeordneten Seiten der Plattform entgegengesetzt zueinander höhenverstellt. Anders gesagt wird eine parallel zur Schwenkachse ausgerichtete Seite der Plattform durch die Schwenkeinrichtung angehoben, wenn sich die gegenüberliegende Seite der Plattform zugleich senkt.

Bevorzugt sind an der Transporteinheit Mittel zum Erfassen einer aktuellen Erstreckung eines Trägers sowie zum Steuern des Neigemechanismus angeordnet. Die Mittel zum Erfassen der aktuellen Erstreckung des Trägers können eine oder mehrere Sensoreinheiten mit Sensorelementen umfassen, die auf Basis unterschiedlicher Messverfahren direkt oder indirekt die Erstreckung des Trägers, das heißt die Lage des Trägers im Raum erfassen und einen die Erstreckung des Trägers charakterisierenden Messwert an ein Steuergerät der Transporteinheit übermittelt. Mit anderen Worten wird eine Ist-Erstreckung des Trägers bestimmt.

Ferner bevorzugt sind an der Transporteinheit Mittel zum Erfassen einer aktuellen Neigung der Plattform angeordnet. Die Mittel zum Erfassen der aktuellen Neigung der Plattform können ebenfalls eine oder mehrere Sensoreinheiten mit Sensorelementen umfassen, die zur Datenübertragung mit dem Steuergerät verbunden sind. Die von den Mitteln zum Erfassen der aktuellen Erstreckung des Trägers übermittelten Messwerte werden durch das Steuergerät mit die aktuelle Neigung oder Erstreckung der Plattform charakterisierenden Messwerten abgeglichen. Mit anderen Worten wird die Ist-Neigung der Plattform bestimmt.

Das Steuergerät ist dazu eingerichtet, den Neigemechanismus derart zu steuern, dass die aktuelle Ist-Neigung der Plattform an eine Soll-Neigung der Plattform, welche der Ist-Erstreckung des Trägers entspricht, angenähert wird. Auf diese Weise wird die Plattform durch eine vom Neigemechanismus initiierte Neigung der Plattform im Wesentlichen fluchtend zu dem Träger ausgerichtet.

Des Weiteren bevorzugt ist die Transporteinheit auf einem Schienensystem, bestehend aus einer ersten und zweiten Schiene in der Hauptgasse, verfahrbar. Alternativ kann die Transporteinheit auch auf Rädern oder Rollen entlang der Hauptgasse bewegt werden. Bevorzugt ist eine entsprechende Wegsensorik mit dem Steuergerät verbunden, um die Position der Transporteinheit relativ zu den Lagergassen zu bestimmen.

Vorzugsweise ist der Schlitten über mehrere Räder auf der Plattform gelagert. Auf jeder quer zur Hauptgasse verlaufenden Seite des Schlittens sind mindestens zwei Räder am Schlitten ausgebildet. Diese sind derart ausgebildet und am Schlitten gelagert, dass eine sichere und gleichmäßige Übergabe und Übernahme des Schlittens zwischen der Plattform und der Lagergasse möglich ist.

Die Erfindung schließt die technische Lehre ein, dass die Räder in Führungsschienen geführt sind, die Bestandteil der Plattform sind. Anders gesagt ist der Schlitten durch die Führungsschienen in Längsrichtung geführt verlagerbar und in Querrichtung gesichert.

Bevorzugt sind die Räder entlang in der Lagergasse angeordneter Querträger geführt. An den Querträgern sind Rollbahnen für die Räder und Auflagen für die Stückgüter ausgebildet. Während der Ausrichtung der Plattform der Transporteinheit gegenüber dem Träger der Lagergasse werden die Führungsschienen der Plattform im Wesentlichen fluchtend zu den Rollbahnen an den Querträgern der Lagergasse ausgerichtet, so dass der Schlitten ungehindert, also ohne dass die Räder des Schlittens Höhenunterschiede überbrücken müssen, von der Plattform in die Lagergasse oder umgekehrt verfahrbar ist.

Des Weiteren bevorzugt weist der Schlitten eine höhenverstellbare Auflagefläche zur Aufnahme des Stückguts auf. Die Führungsschienen der Plattform sowie die Querträger der Lagergassen sind vorzgusweise im Wesentlichen Z-förmig ausgebildet. Anders gesagt weisen die Führungsschienen und die Querträger eine erste Standfläche zum Anschluss an die Plattform bzw. zum Anschluss an den jeweiligen Träger, sowie eine zweite Standfläche zur Abstützung des Stückguts auf der Führungsschiene bzw. auf dem Querträger auf. Die beiden Standflächen sind über einen im Wesentlichen senkrecht zu ihnen ausgebildeten Steg einteilig verbunden.

Der Schlitten ist bezogen auf die Führungsschienen und Querträger derart ausgestaltet, dass die Auflagefläche zum vertikalen Bewegen des jeweiligen Stückguts anhebbar ist, um das Stückgut von den Führungsschienen bzw. den Querträgern aufzunehmen. Mit anderen Worten trägt der Schlitten während des Transports das Eigengewicht des Stückguts. Nachdem der Schlitten den für das jeweilige Stückgut vorgesehenen Lagerplatz erreicht hat, wird die Auflagefläche abgesenkt, sodass das Stückgut an der zweiten Standfläche des jeweiligen Querträgers zur Anlage kommt. Analog dazu wird die Auflagefläche des Schlittens nach Erreichen einer bestimmten Position ebenfalls abgesenkt, um das Stückgut für den weiteren Transport mittels der Transporteinheit auf der zweiten Standfläche der jeweiligen Führungsschiene abzulegen.

Weitere Einzelheiten und Vorteile ergeben sich aus der nachfolgenden Beschreibung von zwei in den Figuren dargestellten Ausführungsbeispielen. Darin zeigen
- Figur 1a: eine schematische Ansicht eines Warenlagers mit einer Transporteinheit gemäß einer ersten Ausführungsform,
- Figur 1b: eine schematische Seitenansicht des Warenlagers nach Figur 1a,
- Figur 2a: eine vereinfachte Ansicht der Transporteinheit des Warenlagers nach den Figuren 1a und 1b, wobei eine Plattform der Transporteinheit in einem ungeneigten Zustand vorliegt,
- Figur 2b: eine Ansicht der Transporteinheit des Warenlagers nach Figur 2a, wobei die Plattform in einem geneigten Zustand vorliegt, und
- Figur 3: eine vereinfachte Ansicht der Transporteinheit des Warenlagers gemäß einer zweiten Ausführungsform, wobei die Plattform der Transporteinheit in einem geneigten Zustand vorliegt.

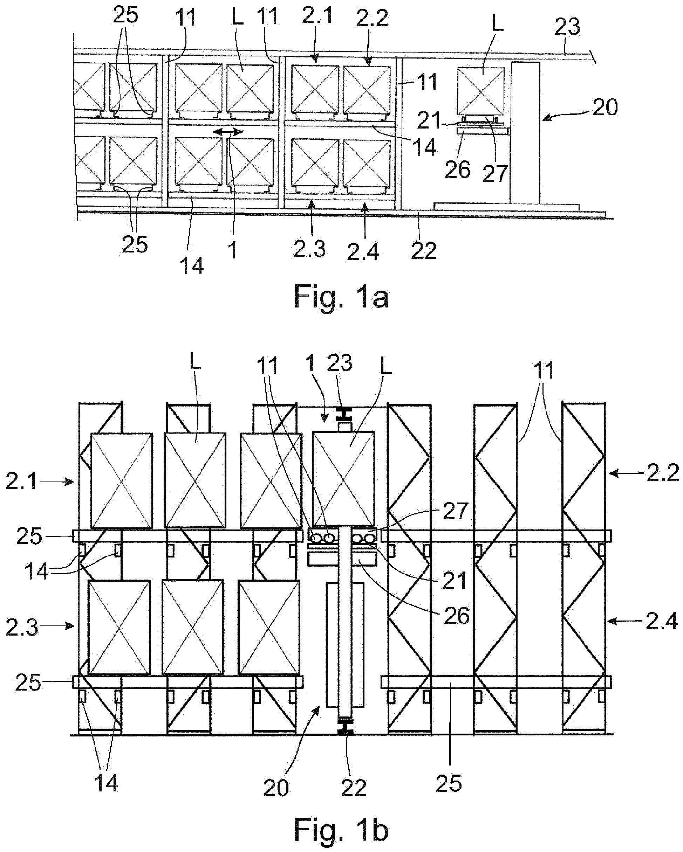

In den Figuren 1a und 1b ist ein mehrstöckiges Warenlager für die Lagerung von Stückgütern L dargestellt. Das Warenlager umfasst eine Hauptgasse 1 und mehreren quer zu der Hauptgasse 1 angeordnete Lagergassen 2.1 - 2.4 mit jeweils einer Mehrzahl von in Reihe hintereinander angeordneten Lagerplätzen zur Aufnahme jeweils eines Stückguts L.

Parallel zu der Hauptgasse 1 sind horizontale Träger 14 angeordnet, die zumindest einen Teil der in den Lagergassen 2.1 - 2.4 wirkenden Gewichtskräfte stützen. Die horizontalen Träger 14 sind an vertikalen Stützen 11 befestigt und erstrecken sich zwischen diesen Befestigungen. Ferner sind quer zur Hauptgasse 1 und parallel zu den Lagergassen 2.1 - 2.4 angeordnete horizontale Querträger 25 zum Abstützen der gelagerten Stückgüter L angeordnet. Die Querträger 25 sind z. B. auf den Trägern 14 abgestützt und befestigt und bilden oben die Auflagen für die Stückgüter.

In der Hauptgasse 1 ist eine Transporteinheit 20 für den Transport der Stückgüter L angeordnet. Die Transporteinheit 20 weist einen ersten Transportmechanismus zur Bewegung der Transporteinheit 20 längs der Hauptgasse 1 auf. Dazu ist die Transporteinheit 20 auf einem Schienensystem entlang der Hauptgasse 1 verfahrbar, das aus einer ersten Schiene 22 und einer zweiten Schiene 23 besteht.

Ferner weist die Transporteinheit 20 einen zweiten Transportmechanismus zur Übergabe eines jeweiligen Stückguts L von der Transporteinheit 20 in eine der Lagergassen 2.1 - 2.4 und zur Übernahme eines Stückguts L von einer der Lagergassen 2.1 - 2.4 auf die Transporteinheit 20 auf.

Der zweite Transportmechanismus umfasst einen quer zur Hauptgasse 1 bis in die Lagergassen hinein beweglichen, auf Rädern geführten Schlitten 27, der eine Auflage für das Stückgut L bei dessen Übergabe und Übernahme aufweist.

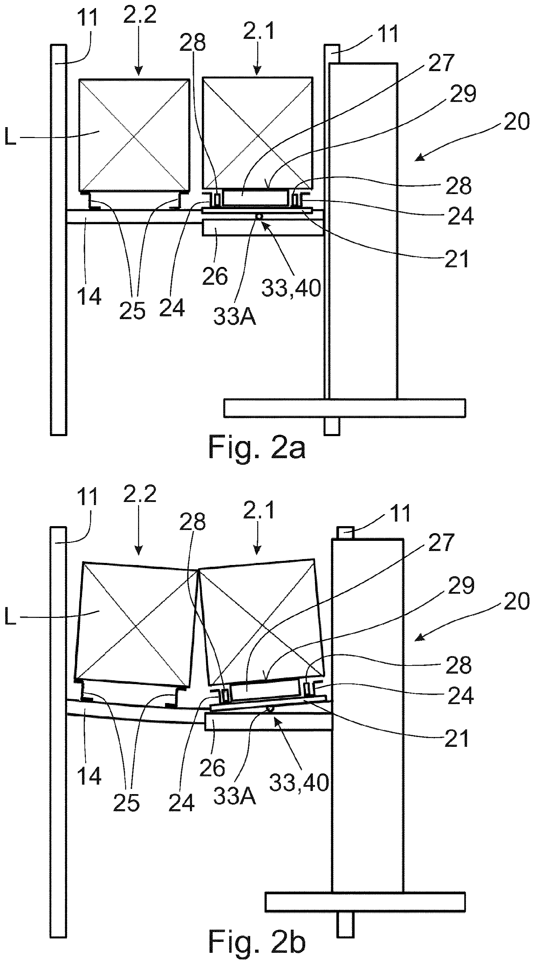

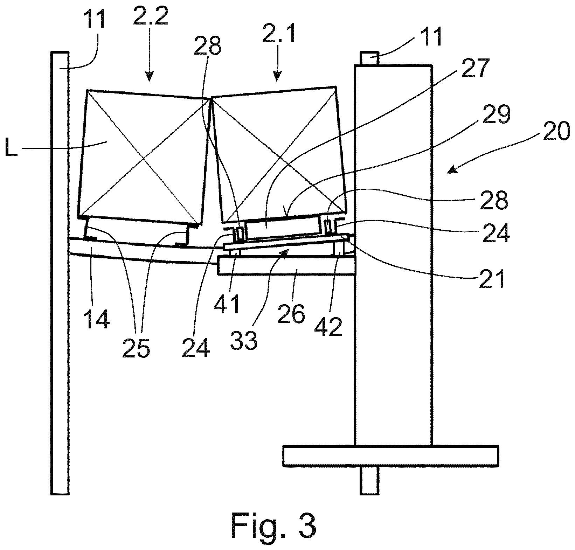

Nach den Figuren 2a, 2b und 3 ist der radgeführte Schlitten 27 auf einer neigbaren Plattform 21 der Transporteinheit 20 abgestützt. Die Plattform 21 ist wirksam mit einem Neigemechanismus 33 verbunden. Der Neigemechanismus 33 verbunden. Der Neigemechanismus 33 ist wiederum auf einer höhenverstellbaren Hebebühne 26 der Transporteinheit 20 abgestützt und ist dazu ausgebildet, die Plattform 21 relativ zur Transporteinheit 20 und zur Hebebühne 26 zu neigen. Über die Hebebühne 26 ist die Höhe der Plattform 21 relativ zur jeweiligen Lagergasse 2.1 - 2.4 einstellbar.

Der Schlitten 27 ist über mehrere Räder 28 rollend auf der Plattform 21 geführt, wobei die Räder 28 in zwei parallel zueinander angeordneten Führungsschienen 24 geführt sind, die quer zur Hauptgasse 1 verlaufen und Bestandteil der Plattform 21 sind. Der Schlitten 27 weist eine höhenverstellbare Auflagefläche 29 zur Aufnahme des Stückguts L auf, durch die das Stückgut L von den Führungsschienen 24 und den Querträgern 25 anhebbar ist.

Zur Übergabe des Stückguts L an die jeweils ausgewählte Lagergasse 2.1 wird der Schlitten 27 quer zur Hauptgasse 1 bis in die Lagergasse 2.1 gerollt. Dabei ist der Schlitten 27 zunächst an den Führungsschienen 24 der Plattform 21 geführt und wird bei der Übergabe des Stückguts L an den entlang der Lagergasse 2.1 angeordneten Querträgern 25 geführt. Die Querträger 25 sind zu diesem Zweck jeweils teilweise als Schienen ausgebildet, die als Rollbahnen dienen.

Durch den Neigemechanismus 33 werden die Führungsschienen 24 der Plattform 21 vor der Übergabe bzw. vor der Übernahme des Stückguts L fluchtend zu den an den Querträgern 25 ausgebildeten Schienen angeordnet, so dass eine ungehinderte Übergabe bzw. Übernahme des Schlittens 27 möglich ist, ohne dass es zu Stößen oder Erschütterungen an dem Schlitten und damit an dem Stückgut L kommen kann.

An der Transporteinheit 20 sind Mittel zum Erfassen der aktuellen Erstreckung (Neigung) des jeweiligen horizontalen Trägers 14 sowie Mittel zum Steuern des Neigemechanismus 33 angeordnet. Darüber hinaus sind Mittel zum Erfassen einer aktuellen Neigung der Plattform 21 vorgesehen. Die Erfassung der aktuellen Erstreckung (Neigung) des jeweiligen Trägers 14 sowie der aktuellen Neigung der Plattform 21 erfolgt mittels - hier nicht dargestellter - Sensorik, die zur Datenübertragung mit einem - ebenfalls nicht gezeigten - Steuergerät verbunden ist. Dieses Steuergerät kann mit einer - nicht gezeigten - Antriebseinheit verbunden sein, die den Neigemechanismus 33 antreibt und steuert.

In den Figuren 2a und 2b ist eine erste Ausführungsform der Transporteinheit 20 und insbesondere des zweiten Transportmechanismus vereinfacht gezeigt. Figur 2a zeigt einen Idealfall des Warenlagers, bei dem die vertikalen Stützen 11, die horizontalen Träger 14 sowie die Schienen an den horizontalen Querträgern 25 keine Verformung aufweisen. In diesem Fall ist keine Neigung der Plattform 21 zur Übergabe bzw. Übernahme des Stückguts erforderlich.

In der Realität weisen die Stützen 11, die Träger 14 und die mit Schienen versehenen Querträger 25 jedoch Verformungen auf, wobei insbesondere die Träger 14, wie in Figur 2b übermäßig dargestellt, durchbiegen. Die Durchbiegung der Träger 14 ist größer, je weiter die vertikalen Stützen 11 voneinander beabstandet sind und je größer die auf die Träger 14 wirkenden Lasten sind. Am in Figur 2a exemplarisch dargestellten Träger 14 sind vorliegend vier Querträger 25, zwei Querträger 25 der ersten Lagergasse 2.1 und zwei Querträger 25 der zweiten Lagergasse 2.2 angeschlossen, wobei auf den Querträgern 25 bereits Stückgüter L angeordnet sind, die bereits eine Durchbiegung des Trägers 14 vorweisen, bevor das auf der Plattform 21 angeordnete Stückgut L in die Lagergasse 2.1 übergeben wird.

Bei den Figuren 2a und 2b weist der Neigemechanismus 33 des zweiten Transportmechanismus eine Schwenkeinrichtung 40 mit einer sich quer zur Richtung der Hauptgasse 1 erstreckenden Schwenkachse 33A auf. Die Schwenkeinrichtung 40 ist mittig unter der Plattform 21 und zwischen der Hebebühne 26 und der Plattform 21 angeordnet.

Nach Figur 2b wird vor Übergabe des Stückguts L in die Lagergasse 2.1 die Plattform im Bereich vor der Lagergasse 2.1 positioniert, wobei die Mittel zum Erfassen der aktuellen Erstreckung des Trägers 14 eine Krümmung des Trägers 14 erfassen. Ferner wird durch die Mittel zum Erfassen der aktuellen Neigung der Plattform 21 die Neigung der Plattform 21 relativ zum Träger 14 sowie zur Transporteinheit 20 detektiert.

Mittels der Schwenkeinrichtung 40 des Neigemechanismus 33 wird anschließend die Plattform 21 derart geneigt, dass die Führungsschienen 24 der Plattform 21 im Wesentlichen fluchtend zu den - hier aus perspektivischen Gründen verdeckten - Schienen an den Querträgern 25 der Lagergasse 2.1 ausgerichtet sind. Anders gesagt weisen die Führungsschienen 24 und die Querträger 25 jeweils eine Rollbahn für die Räder 28 des Schlittens 27 auf, wobei die Höhe der Rollbahn an den Führungsschienen 24 an die Höhe der Rollbahn an den Querträgern 25 angepasst wird. Dadurch kann die nachfolgende Übergabe des Schlittens 27 mit dem darauf angeordneten Stückgut L ungehindert erfolgen, so dass die Räder 28 des Schlittens 27 keine Höhenunterschiede zwischen den Führungsschienen 24 und den fluchtend dazu angeordneten Schienen an den Querträgern 25 überwinden müssen.

Eine Übernahme des Stückguts L zurück auf die Plattform erfolgt analog, wobei der Neigemechanismus 33 die Plattform 21 mit den Führungsschienen 24 zunächst relativ zum Träger 14 mit den jeweiligen Querträgern 25 ausrichtet, bevor dann der Schlitten 27 aus der jeweiligen Lagergasse 2.1 - 2.4 auf die Plattform bewegt wird. Der Neigemechanismus 33 kann dabei derart durch das Steuergerät geregelt und gesteuert werden, dass die Position der Plattform 21, insbesondere deren Höhe und Neigung auch bei plötzlichen oder gleichmäßigen Belastungsänderungen durch das Stückgut L und/oder den Schlitten 27 beibehalten wird.

In Figur 3 ist eine zweite Ausführungsform der Transporteinheit 20 und insbesondere des zweiten Transportmechanismus vereinfacht gezeigt. Der Unterschied zu der Transporteinheit 20 gemäß den Figuren 1a bis 2b besteht darin, dass der Neigemechanismus 33 keine ortsfeste Schwenkachse aufweist, sondern ein erstes und ein zweites Stellglied 41, 42, die zur Neigung der Plattform 21 getrennt voneinander einstellbar sind. Die Stellglieder 41, 42 sind jeweils im Bereich einer der beiden parallel zur Lagergasse 2.1 - 2.4 angeordneten Seiten der Plattform 21 und zwischen der Plattform 21 und der Hebebühne 26 der Transporteinheit 20 angeordnet.

Die Stellglieder 41, 41 des Neigemechanismus 33 werden bei Übergabe oder Übernahme des Stückguts L unter Berücksichtigung der erfassten Messwerte der aktuellen Erstreckung des Trägers 14 sowie zur aktuellen Neigung der Plattform 21 durch das Steuergerät betätigt, um die Führungsschienen 24 der Plattform 21 durch Neigung der Plattform 21 im Wesentlichen fluchtend zu den Schienen an den Querträgern 25 der jeweiligen Lagergasse 2.1 - 2.4 auszurichten.

### Bezugszeichenliste

- 1: Hauptgasse
- 2.1: Lagergasse
- 2.2: Lagergasse
- 2.3: Lagergasse
- 2.4: Lagergasse
- 11: Stütze
- 14: Träger
- 20: Transporteinheit
- 21: Plattform
- 22: Schiene für die Transporteinheit
- 23: Schiene für die Transporteinheit
- 24: Führungsschiene der Plattform
- 25: Querträger
- 26: Hebebühne
- 27: Schlitten
- 28: Rad
- 29: Auflagefläche
- 33: Neigemechanismus
- 33A: Schwenkachse
- 40: Schwenkeinrichtung
- 41: Stellglied
- 42: Stellglied

- L: Stückgut

## Patentansprüche

1. Warenlager zum Lagern von Stückgütern (L),
mit einer Hauptgasse (1) und mit quer zu der Hauptgasse (1) angeordneten Lagergassen (2.1 - 2.4) mit einer Mehrzahl von Lagerplätzen zur Aufnahme eines jeweiligen Stückguts (L),
mit parallel zu der Hauptgasse (1) angeordneten und zumindest einen Teil der in den Lagergassen (2.1 - 2.4) wirkenden Gewichtskräfte stützenden Trägern (14), die an Stützen (11) befestigt sind und sich zwischen diesen Befestigungen erstrecken,
mit einer in der Hauptgasse (1) angeordneten Transporteinheit (20) für den Transport der Stückgüter (L), wobei die Transporteinheit (20)
- einen ersten Transportmechanismus zur Bewegung längs der Hauptgasse (1) und
- einen zweiten Transportmechanismus zur Übergabe eines Stückguts (L) von der Transporteinheit (20) in eine der Lagergassen (2.1 - 2.4) und zur Übernahme eines Stückguts (L) von einer der Lagergassen (2.1 - 2.4) auf die Transporteinheit (20)
aufweist,
und mit einem quer zur Hauptgasse (1) beweglichen Schlitten (27), der Bestandteil des zweiten Transportmechanismus ist und eine Auflage für das Stückgut (L) bei dessen Übergabe und Übernahme bildet, **wobei** der Schlitten (27) in der Transporteinheit (20) auf einer neigbaren Plattform (21) mit einem Neigemechanismus (33) abgestützt ist, und dass der Neigemechanismus (33) ausgebildet ist, die Plattform (21) relativ zur Transporteinheit (20) zu neigen, **dadurch gekennzeichnet, dass**
- der Neigemechanismus (33) ein erstes und ein zweites Stellglied (41, 42) umfasst, die zur Neigung der Plattform (21) voneinander getrennt einstellbar sind
oder
- der Neigemechanismus (33) eine Schwenkeinrichtung (40) mit einer sich quer zur Richtung der Hauptgasse (1) erstreckenden Schwenkachse (33A) aufweist, und dass die Schwenkeinrichtung (40) mit der Schwenkachse (33A) mittig unter der Plattform (21) angeordnet ist.

2. Warenlager nach Anspruch 1, **gekennzeichnet durch** an der Transporteinheit (20) angeordnete Mittel zum Erfassen einer aktuellen Erstreckung eines Trägers (14) sowie zum Steuern des Neigemechanismus (33).

3. Warenlager nach einem der vorangehenden Ansprüche, **gekennzeichnet durch** an der Transporteinheit (20) angeordnete Mittel zum Erfassen einer aktuellen Neigung der Plattform (21).

4. Warenlager nach einem der vorangehenden Ansprüche, **dadurch gekennzeichnet, dass** die Transporteinheit (20) mittels eines Schienensystems, bestehend aus einer ersten und zweiten Schiene (22, 23) in der Hauptgasse (1) verfahrbar ist.

5. Warenlager nach einem der vorangehenden Ansprüche, **dadurch gekennzeichnet, dass** der Schlitten (27) über mehrere Räder (28) rollbar auf der Plattform (21) gelagert ist.

6. Warenlager nach Anspruch 5, **dadurch gekennzeichnet, dass** die Räder (28) in Führungsschienen (24) geführt sind, die Bestandteil der Plattform (21) sind.

7. Warenlager nach einem der Ansprüche 5 oder 6, **dadurch gekennzeichnet, dass** die Räder (28) entlang in der Lagergasse (2.1 - 2.4) angeordneter Querträger (25) geführt sind, wobei an den Querträgern (25) Rollbahnen für die Räder (28) und Auflagen für die Stückgüter (2) ausgebildet sind.

8. Warenlager nach einem der vorangehenden Ansprüche, **dadurch gekennzeichnet, dass** der Schlitten (27) eine höhenverstellbare Auflagefläche (29) zur Aufnahme des Stückguts (L) aufweist.

## Claims

1. Warehouse for storing packaged goods items (L),
with a main lane (1) and with storage lanes (2-1 - 2.4) which are arranged transversely with respect to the main lane (1) with a plurality of storage locations for receiving a respective packaged goods item (L),
with carriers (14) which are arranged parallel to the main lane (1), support at least part of the weight forces acting in the storage lanes (2.1 - 2.4), are fastened to supports (11) and extend between these fasteners,
with a transport unit (20) arranged in the main lane (1) for the transport of the packaged goods (L), the transport unit (20) having
- a first transport mechanism for the movement along the main lane (1), and
- a second transport mechanism for the transfer of a packaged goods item (L) from the transport unit (20) into one of the storage lanes (2.1 - 2.4) and for the acceptance of a packaged goods item (L) from one of the storage lanes (2.1 - 2.4) onto the transport unit (20),
and with a carriage (27) which can be moved transversely with respect to the main lane (1), is a constituent part of the second transport mechanism, and forms a rest for the packaged goods item (L) during the transfer and acceptance thereof, the carriage (27) being supported in the transport unit (20) on a tiltable platform (21) with a tilting mechanism (33), and the tilting mechanism (33) being configured to tilt the platform (21) relative to the transport unit (20), **characterized in that**
- the tilting mechanism (33) comprises a first and a second actuator (41, 42) which can be set separately from one another in order to tilt the platform (21),
or
- the tilting mechanism (33) has a pivoting device (40) with a pivot axis (33A) which extends transversely with respect to the direction of the main lane (1), and **in that** the pivoting device (40) is arranged with the pivot axis (33A) centrally below the platform (21).

2. Warehouse according to Claim 1, **characterized by** means arranged on the transport unit (20) for the detection of the current extent of a carrier (14) and for the control of the tilting mechanism (33).

3. Warehouse according to either of the preceding claims, **characterized by** means arranged on the transport unit (20) for the detection of a current inclination of the platform (21).

4. Warehouse according to one of the preceding claims, **characterized in that** the transport unit (20) can be moved by means of a rail system, consisting of a first and second rail (22, 23) in the main lane (1).

5. Warehouse according to one of the preceding claims, **characterized in that** the carriage (27) is mounted on the platform (21) such that it can roll via a plurality of wheels (28).

6. Warehouse according to Claim 5, **characterized in that** the wheels (28) are guided in guide rails (24) which are a constituent part of the platform (21).

7. Warehouse according to either of Claims 5 and 6, **characterized in that** the wheels (28) are guided along crossmembers (25) which are arranged in the storage lanes (2.1 - 2.4), rolling paths for the wheels (28) and rests for the packaged goods items (2) being configured on the crossmembers (25).

8. Warehouse according to one of the preceding claims, **characterized in that** the carriage (27) has a height-adjustable rest surface (29) for receiving the packaged goods item (L).

## Revendications

1. Entrepôt de marchandises pour l'entreposage d'articles individuels (L),
avec une allée principale (1) et avec des allées d'entreposage (2.1-2.4) agencées transversalement à l'allée principale (1) avec une pluralité d'emplacements d'entreposage pour la réception d'un article individuel (L) respectif,
avec des supports (14) agencés parallèlement à l'allée principale (1) et soutenant au moins une partie des forces de poids agissant dans les allées d'entreposage (2.1-2.4), qui sont fixés à des soutiens (11) et s'étendent entre ces fixations,
avec une unité de transport (20) agencée dans l'allée principale (1) pour le transport des articles individuels (L), l'unité de transport (20) comprenant
- un premier mécanisme de transport pour le déplacement le long de l'allée principale (1) et
- un deuxième mécanisme de transport pour le transfert d'un article individuel (L) de l'unité de transport (20) à l'une des allées d'entreposage (2.1-2.4) et pour la réception d'un produit individuel (L) de l'une des allées d'entreposage (2.1-2.4) sur l'unité de transport (20), et avec un chariot (27) mobile transversalement à l'allée principale (1), qui fait partie du deuxième mécanisme de transport et forme un appui pour le produit individuel (L) lors de son transfert et de sa réception, le chariot (27) étant soutenu dans l'unité de transport (20) sur une plate-forme inclinable (21) avec un mécanisme d'inclinaison (33), et le mécanisme d'inclinaison (33) étant configuré pour incliner la plate-forme (21) par rapport à l'unité de transport (20), **caractérisé en ce que**
- le mécanisme d'inclinaison (33) comprend un premier et un deuxième actionneur (41, 42) qui peuvent être réglés séparément l'un de l'autre pour incliner la plate-forme (21),
ou
- le mécanisme d'inclinaison (33) comprend un dispositif de pivotement (40) avec un axe de pivotement (33A) s'étendant transversalement à la direction de l'allée principale (1), et **en ce que** le dispositif de pivotement (40) est agencé avec l'axe de pivotement (33A) au centre sous la plate-forme (21).

2. Entrepôt de marchandises selon la revendication 1, **caractérisé par** des moyens agencés sur l'unité de transport (20) pour détecter une extension actuelle d'un support (14) ainsi que pour commander le mécanisme d'inclinaison (33).

3. Entrepôt de marchandises selon l'une quelconque des revendications précédentes, **caractérisé par** des moyens agencés sur l'unité de transport (20) pour détecter une inclinaison actuelle de la plate-forme (21).

4. Entrepôt de marchandises selon l'une quelconque des revendications précédentes, **caractérisé en ce que** l'unité de transport (20) peut être déplacée dans l'allée principale (1) au moyen d'un système de rails, constitué d'un premier et d'un deuxième rail (22, 23).

5. Entrepôt de marchandises selon l'une quelconque des revendications précédentes, **caractérisé en ce que** le chariot (27) est monté de manière à pouvoir rouler sur la plate-forme (21) par l'intermédiaire de plusieurs roues (28).

6. Entrepôt de marchandises selon la revendication 5, **caractérisé en ce que** les roues (28) sont guidées dans des rails de guidage (24) qui font partie de la plate-forme (21).

7. Entrepôt de marchandises selon l'une quelconque des revendications 5 ou 6, **caractérisé en ce que** les roues (28) sont guidées le long de supports transversaux (25) agencés dans l'allée d'entreposage (2.1-2.4), des chemins de roulement pour les roues (28) et des appuis pour les articles individuels (2) étant formés sur les supports transversaux (25).

8. Entrepôt de marchandises selon l'une quelconque des revendications précédentes, **caractérisé en ce que** le chariot (27) présente une surface d'appui (29) réglable en hauteur pour la réception de l'article individuel (L) .
